# EUROPEAN PATENT APPLICATION

(11) **EP 4 772 924 A1**
(43) Date of publication of application: **08.07.2026**
(21) Application number: 25225363.8
(22) Date of filing: 19.12.2025
(51) Int. Cl.: G02B 6/42

(54) **LOW-COST SILICON PHOTONIC OPTICAL ENGINE DEVICE**

(30) Priority: 31.12.2024 US 202419007135
(71) Applicant: Cisco Technology, Inc., San Jose, CA 95134-1706 (US)
(72) Inventor: Chen, Li, San Jose, 95134-1706 (US); Chen, Long, San Jose, 95134-1706 (US); Heanue, John, San Jose, 95134-1706 (US); Parvizi, Mahdi, San Jose, 95134-1706 (US); Aroca, Ricardo A, San Jose, 95134-1706 (US)
(74) Representative: Noble, Nicholas

(57) **Abstract**

An advanced optical device featuring a substrate with a receiver photonic integrated circuit (PIC) and a transimpedance amplifier (TIA) is disclosed. The PIC is mechanically coupled to the substrate, while the TIA is mounted to the substrate and electrically connected to the PIC. One configuration includes a receiver die flip-chip bonded to a TIA die using copper pillar bumps, optimizing space with the PIC having a smaller footprint than the TIA. A fiber array is precisely aligned and attached to the PIC using epoxy bonding, aided by alignment marks indicating spot-size converters (SSCs). The PIC incudes multiple photodetectors and waveguides, enhancing light guidance and conversion. The manufacturing process involves a chip-on-wafer technique, forming a dam for epoxy application, and precise alignment of fiducials to the fiber array. The method also includes molding, forming through-mold vias, and redistributing electrical connections, ensuring efficient signal processing and integration without wire bonding.

## Description

### FIELD

This disclosure relates generally to silicon photonic optical engines.

### BACKGROUND

The Silicon photonics (SiP) transceiver technology is utilized in short-reach optical communications. A typical silicon photonic optical engine may include transmitting modulators, receiving photodetectors, and driver (DRV) and transimpedance amplifier (TIA).

### BRIEF DESCRIPTION OF THE FIGURES

Unless specified otherwise, the accompanying drawings illustrate aspects of the innovations described herein. Referring to the drawings, wherein like numerals refer to like parts throughout the several views and this specification, several embodiments of presently disclosed principles are illustrated by way of example, and not by way of limitation. The drawings are not intended to be to scale. A more complete understanding of the disclosure may be realized by reference to the accompanying drawings in which:
Figure 1a illustrates an optical engine, according to an embodiment of the present disclosure.
Figure 1b shows the cross-section of the optical engine packaged in a transceiver module, according to an embodiment of the present disclosure.
Figures 2a-2f shows the schematics of a 4-channel RX PIC with various configurations.
Figure 3a illustrates a group of 4 dies on a wafer through a chip on wafer bonding process, according to an embodiment of the present disclosure.
Figure 3b illustrates a single stack-die-assembly (SDA) wafer 302a, according to an embodiment of the present disclosure.
Figure 4a-d illustrates a process for forming the optical engine assembly process.
Figure 5a-f illustrate a cross-sectional view of an assembly process, according to an embodiment of this disclosure.
Figure 6 illustrates a method of manufacture, according to an embodiment of this disclosure.
Figure 7 illustrates a method of manufacture, according to an embodiment of this disclosure.

### DESCRIPTION OF EXAMPLE EMBODIMENTS OVERVIEW

In part, in one aspect, the disclosure relates to an optical device comprising a substrate, a receiver photonic integrated circuit (PIC) mechanically coupled to the substrate, and a transimpedance amplifier (TIA) mounted to the substrate and electrically coupled to the PIC.

In part, in one aspect, the disclosure relates to a method of manufacturing an optical device, the method comprising bonding a first surface of a receiver photonic integrated circuit (PIC) die onto a first surface of a transimpedance amplifier (TIA) wafer or die to form an assembly, forming a dam around the PIC on the first surface of the TIA, thinning a second surface of the PIC, opposite the first surface of the PIC, applying an underfill epoxy to the assembly, dicing the assembly, aligning fiducials on the PIC to a fiber array relative to the spot-size converters (SSCs), and coupling the fiber array to the PIC.

In part, in one aspect, the disclosure relates to a method of manufacturing a fan-out package on package (FPoP) optical device without wire bonding to a transimpedance amplifier, the method comprising bonding a first surface of a receiver photonic integrated circuit (PIC) die onto a first surface of a transimpedance amplifier (TIA) wafer using a chip-on-wafer process to form an assembly, molding the assembly with a molding material, forming through-mold vias and a redistribution layer, forming copper pillars on the redistribution layer, coupled to the through-mold vias, dicing the molded assembly, aligning fiducials on the PIC to a fiber array relative to the SSCs, and coupling the fiber array to the PIC.

### EXAMPLE EMBODIMENTS

The present disclosure is directed to mitigating the high cost of current silicon photonic receiver optical engines (RX engines) compared to traditional optical technologies, particularly for PAM4 applications. This cost is driven by the photonic integrated circuit (PIC) size, which increases due to the integration of driver and transimpedance amplifier (TIA) on top of the PIC, leading to a significant increase in die area and cost. Additionally, silicon photonic RX engines face competition from cheaper and more efficient InGaAs photodetectors. The solution aims to reduce costs while maintaining high performance RF connections between photodetectors and TIAs through copper pillars, leveraging high-density photonic integration on silicon photonics for more complex functionalities, such as on-chip multiplexing, and ensuring compatibility with different generations of PAM4 applications, like 53 Gbaud and 106 Gbaud PAM4.

In various embodiments, this disclosure is directed to a low-cost silicon photonic RX optical engine for PAM4 applications. It involves a silicon photonic RX die flip-chip bonded on a transimpedance amplifier (TIA) die via copper pillar bumps, with the TIA serving as the hosting substrate for the PIC. This configuration reduces costs by decreasing the PIC die area and allows for the manufacturing of over ten thousand RX dies on a 12-inch PIC wafer at a relatively low cost per die, for example. The proposed configuration maintains high-performance RF connections between the PD and the TIA, leverages high-density photonic integration for complex functionalities like on-chip multiplexing, and enables the optical engine to work for different generations of PAM4 applications, such as 53Gbaud and 106 Gbaud PAM4, with a TIA of reconfigured bandwidth.

In various embodiments, this disclosure is directed to silicon photonics (SiP) transceiver technology. SiP transceiver technology is increasingly being utilized in short-reach optical communications, particularly for intra-data center communication and high-performance computing. SiP integration, which enables higher density, higher yield, may be used for 400GE and next generation 800GE standards.

A typical silicon photonic optical engine (OE) may include transmitting modulators, receiving photodetectors, drivers, and transimpedance amplifiers (TIA). The transmitter (TX) and receiver (RX) may be made of two separate optical engines. The driver and TIA dies may be flipped bonded onto the photonic integrated circuit (PIC) as an optical engine stacked die assembly (SDA). External lasers may be coupled to the PIC by a lens assembly or fiber. Such stack-die approach provides a better radio frequency (RF) interface between the driver and modulation for the TX and between the TIA and the photodetector for the RX.

Although SiP may be used for PAM4 optical transceivers, the SiP faces severe competition from traditional optical technologies especially the III-V externally modulated lasers (EML) and III-V photodetectors. One important factor for comparison of these optical transceivers is the cost. The cost of current SDA OE is dominated by the PIC cost, which scales with the die size. As the driver and TIA are integrated on the top of the PIC, additional die area on the PIC is required to interface with the driver and TIA, which increases the die area and subsequently the die cost significantly.

On the TX side, SiP engines can use cheaper uncooled lasers and may share one laser among multiple channels, so the cost can still be better than the EML solution. However, on the RX side, the cost for a four-channel InGsAS surface illuminated PD array can be comparatively, making it very difficult for current SiP RX engine to compete. In addition, for lower baud rate (e.g., 56Gbaud or lower) applications, an InGaAs PD typical has better responsivity compared to silicon photonic due to better coupling efficiency. As a result, SiP RX engines are not as welcomed as SiP TX engines by the industry. It is desired to keep the distance of the connection between the TIA and the PIC as short as possible.

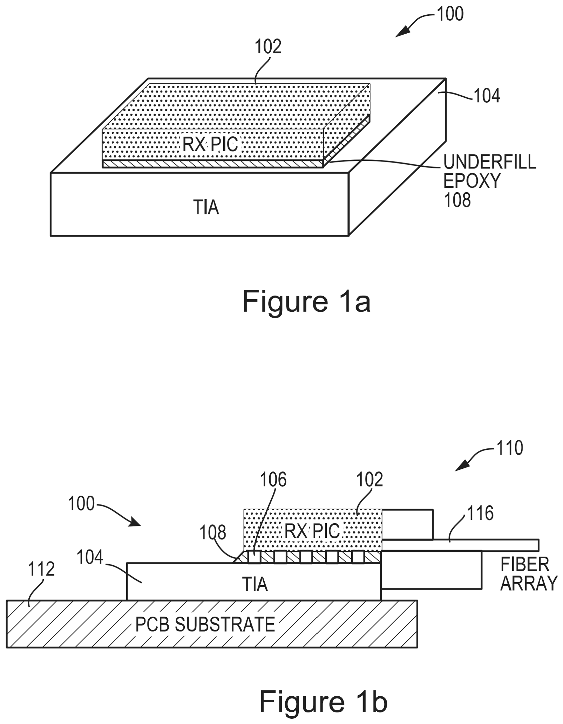

In this disclosure, a low-cost silicon photonic RX optical engine for PAM4 applications is proposed. Turning to the figures, Figure 1a illustrates an optical engine, according to an embodiment of the present disclosure. The optical engine 100 includes a silicon photonic RX die 102 that is flip-chip bonded on a transimpedance amplifier 104 (TIA) die via copper pillar bumps. As the TIA 104 is the hosting substrate for the PIC 102, the PIC 102 die does not need additional area for powering or hosting the TIA 104. The PIC 102 area is smaller than the TIA 104 and can be optimized to reduce the cost. A typical 4-channel RX die is on the order of 1 to 1.5 mm by 2.5 to 3 mm. This configuration allows a wafer during manufacturing to yield over ten thousand RX dies on a 12-inch PIC wafer with a relatively low cost per die.

Figure 1b shows the cross-section of the optical engine 100 packaged in a transceiver module 110. The optical engine 100 is mounted on a substrate 112 that provides the necessary circuitry to power the optical engine through wire bonding. The TIA 104 RF output connects with the RF transmission line 114 on the substrate 112 through wire bonding as well. The substrate 112 also provides a thermal dissipation path for the TIA 104. The substrate 112 may have a cutout to allow metal heat sink on the bottom of the TIA 104. A heat sink may be placed on top of the RX PIC 102 to provide additional thermal dissipation. A fiber array 116 is aligned with and attached to the RX PIC 102 with epoxy so that the light in the fiber can be coupled into the RX PIC 102. Alignment marks can be put on the backside of the PIC 102 by laser marking to indicate the SSC position. During the fiber attach process, the TIA 104 is powered on to read the photodetector on the RX PIC 102 to facilitate the coupling alignment.

In various embodiments, the substrate 112 may be any one of a common substrate used in various electronic, photonic, and semiconductor applications. Electronic substrates may include, for example, printed circuit boards (PCB), ceramic substrates, Silicon substrates, Silicon-on-Insulator (SOI), glass substrates, metal core substrates, among others. Photonic and optoelectronic substrates may include, for example, Indium Phosphide (InP), Galliun Arsenide (GaAs), sapphire, quartz, among others. Flexible and organic substrates may include, for example, polyimide (PI), PET (Polyethylene Terephthalate), liquid crystal polymer (LCP), among others. Specialized substrates my include, for example, diamond, high-resistivity Silicon, epoxy molding compounds (EMP), Silicon Carbide (SiC). Emerging and advanced substrates may include, for example, graphene or 2D materials, Lithium Niobate (LiNbO₃), glass-ceramic compositions, organic substrates, among others. This diverse list of substrates is compatible with a wide range of technologies, including optical receivers such as the RC PIC 102, integrated circuits such as the TIA 104, and advanced electronic systems.

In various embodiments, the TIA 104 is mounted to the substrate 112 and is electrically coupled to the RX PIC 102 die. As used herein, mounted to the substrate 112 indicates that the TIA 104 is directly positioned, attached, or fixed onto the substrate 112. It may refer to a specific physical placement, such as bonding, soldering, or adhering the component to the surface of the substrate 112. The RX PIC 102 is mechanically coupled to the substrate 112. As used herein mechanically coupled to the substrate 112 is a broader term that refers to any physical interaction or connection that allows the RX PIC 102 to interface with the substrate 112 mechanically. This coupling can include direct attachment, indirect connection via intermediate structures, or even configurations where the RX PIC 102 is supported or constrained by the substrate 112 without direct contact. In other embodiments, the RX PIC 102 may be mounted to the substrate 112 and the TIA 104 may be mechanically coupled to the substrate 112.

The TIA 104 is electrically coupled to the PIC 102 die through the copper pillar bumps 106 between them. Underfill epoxy 108 is applied after flip-chip bonding for mechanical robustness and protection. The TIA 104 provides DC biases for the RF photodetector on the PIC 102. The TIA 104 receives a photo current signal and amplifies and converts the photo current signal to a voltage signal at the output of the TIA 104.

The copper pillar bump connection provides reliable and shorter electrical interfacing between TIA and the photodetectors with better RF performance and less impact from process variation than wire bonding connections. This advantage is especially important for over 100Gbaud PAM4, where this advantage becomes even more important.

The TIA 104 can also provide digital-to-analog conversion (DAC) and analog-to-digital conversion (ADC) to drive the optical phase shifters and read monitor photodetectors on the PIC if necessary. The TIA 104 may provide electrical connections from the PIC to the wire bond pads to enable external control. The TIA 104 may have a large tuning range of bandwidth, so that it can be suitable for different generations of applications (e.g., 53 Gbaud and 106 Gbaud PAM4).

The RX PIC typically has multiple receiver channels, 4 channels and 8 channels are the most common. The RX PIC may be used for parallel single-mode (PSM) or wavelength division multiplexing (WDM) applications.

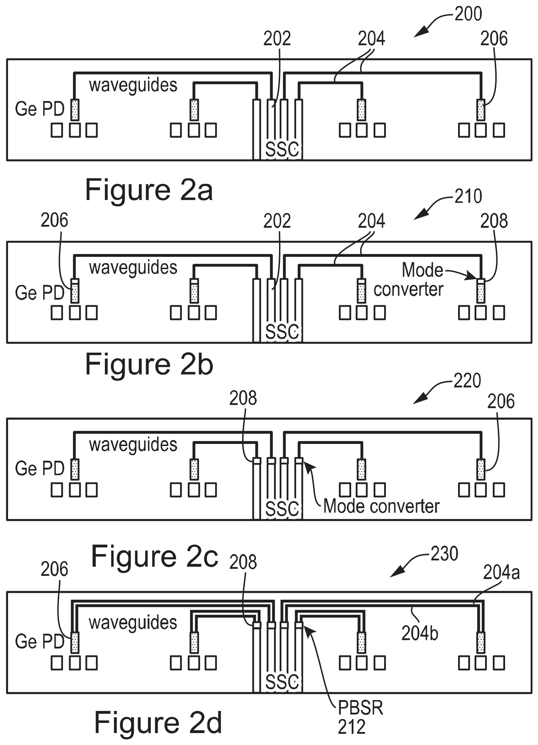

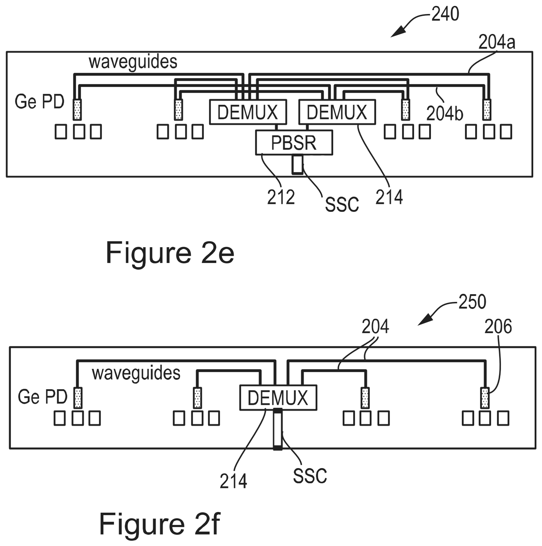

Figures 2a-2f shows the schematics of a 4-channel RX PIC with various configurations. Figures 2a-2d are for the PSM application while Figure 2e is for the CWDM4 application.

Figure 2a illustrates a configuration of an RX PIC 200, according to an embodiment of the present disclosure. The PIC 200 incudes a plurality of spot-size converters 202 (SSC), a plurality of optical waveguides 204, and a plurality of high-speed germanium (Ge) waveguide photodetectors 206. Each SSC 202 is coupled to a waveguide. Each waveguide 204 is coupled to a photodetector 206.

The SSCs 202 convert the typically sub-micron silicon or silicon nitride waveguide mode to a larger mode with typically 5 to 10 um diameters for a better match with the fiber mode. The SSC 202 may have a tilted angle to reduce backside reflection.

The germanium photodetector 206 may be grown on silicon epitaxially and formed as a waveguide illuminated photodetector. Such photodetectors can have a bandwidth of over 60 GHz and a responsivity of close to 1A/W in the O band, making it especially attractive for high-speed applications of 100 Gbaud and beyond.

With low SSC-fiber coupling loss (< 1 dB) and low waveguide loss (<0.3 dB/cm), a responsivity of greater than 0.7 A/W is feasible. In comparison, the surface illuminated photodetector has a tradeoff between bandwidth and responsivity. For PD greater than 50 GHz, the responsivity is typically about 0.65 A/W. The PD typically has a better responsivity for a TE mode light than a TM mode light.

Figure 2b illustrates a configuration of an RX PIC 210, according to an embodiment of the present disclosure. Figure 2c illustrates a configuration of a RX PIC 220, according to an embodiment of the present disclosure. To reduce the polarization dependent loss (PDL), the TM mode converter 208 may convert light to a higher order TE mode, either before the PD (Figure 2b) or after the SSC (Figure 2c).

Figure 2b illustrates a configuration of the PIC 210. The PIC 210 incudes a plurality of SSCs 202, a plurality of optical waveguides 204, and a plurality of high-speed germanium (Ge) waveguide photodetectors 206. Each spot-size-converter 202 is coupled to a waveguide. Each waveguide 204 is coupled to a photodetector 206. A mode converter 208 is coupled between an end of each waveguide 204 and the photodetector 206.

Figure 2c illustrates a configuration of the PIC 220. The PIC 220 incudes a plurality of spot-size converters 202 (SSC), a plurality of optical waveguides 204, and a plurality of high-speed germanium (Ge) waveguide photodetectors 206. Each spot-size-converter 202 is coupled to a waveguide. Each waveguide 204 is coupled to a photodetector 206. A mode converter 208 is coupled between an end of each waveguide 204 and the SSC 202.

Figure 2d illustrates a configuration of an RX PIC 230, according to an embodiment of the present disclosure. The PIC 230 incudes a plurality of spot-size converters (SSC) 202, a plurality of optical waveguides 204a, 204b, and a plurality of high-speed germanium (Ge) waveguide photodetectors 206. Each spot-size-converter 202 is coupled to a pair of waveguides 204a, 204b. Each pair of waveguides 204a, 204b is coupled to a photodetector 206. A polarization beam splitter rotator (PBSR) 212 is coupled between an end of each pair of waveguides 204 and the SSC 202.

The polarization beam splitter rotator 212 (PBSR) may be used to convert the TM mode into TE mode and split the light into a first waveguide 204a and into a second waveguide 204b. Both waveguides 204a, 204b will be terminated at the PD.

Figure 2e shows an RX PIC 240 for the WDM application. The RX PIC 240 includes on-chip demultiplexers 214 (DEMUXs) to separate different wavelengths into different receiver channels. The RX PIC 240 incudes a spot-size converters (SSC) 202, a plurality of DEMUXs 214, a plurality of optical waveguides 204, and a plurality of high-speed germanium (Ge) waveguide photodetectors 206. The spot-size-converter 202 is coupled to a pair of demultiplexers 214. The DEMUXs 214 are coupled to each of the photodetectors 206 by a waveguide 204. A polarization beam splitter rotator 212 (PBSR) is coupled between the pair of demultiplexers 214 and the SSC 202.

Figure 2f illustrates a configuration of the PIC 250. The PIC 250 incudes a spot-size converter 202 (SSC), a plurality of optical waveguides 204, and a plurality of high-speed germanium (Ge) waveguide photodetectors 206. The spot-size-converter 202 is coupled to a DEMUX 214. The DEMUX 214 is coupled to each waveguide 204. Each waveguide 204 is coupled to a photodetector 206.

The DEMUX 214 may be passive without tunning, or active with tuning electrodes to adjust the passband wavelengths. For example, a passive on-chip DEMUX 214 based on silicon nitride waveguides may be used. A PBSR 212 is used to convert TM mode into TE mode, so that both polarizations can use the same DEMUX design. The demultiplexed light from both polarizations is combined at the same receiver PD for each channel. For example, the waveguides 204a couple to DEMUX 214a which couples to each of the photodiodes. For example, the waveguides 204b couple to DEMUX 214b which couples to each of the photodiodes.

The WDM RX optical engine with integrated DEMUX is very cost competitive compared to solutions with thin film filters and bulk optics, which can have a relatively low cost.

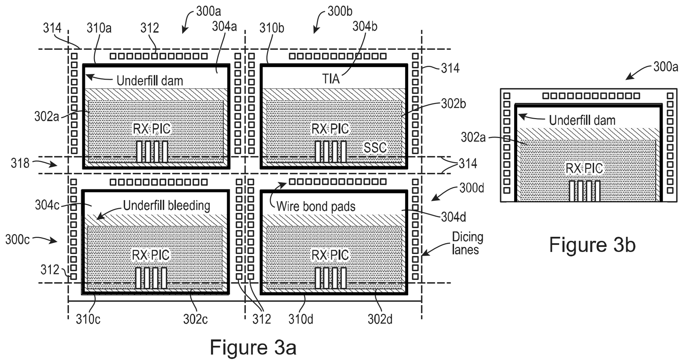

Figure 3a illustrates a group of 4 dies on a wafer through a chip on wafer bonding process, according to an embodiment of the present disclosure. The wafer 350 includes a number of individual RX dies 300. Each RX die 300 comprises a TIA 304a-d and a PIC 302a-d. The PIC 302a-d may be flip chip bonded on the TIA 304a-d. The PIC 302a-d may be bonded to the TIA via a die to die bonding process. An underfill dam310a-d is formed on each RX die 300. The underfill is configured to fill the gap between the PIC 302 and the TIA 304. The underfill dam 310 is configured to stop the spread of the underfill and to create a vertical height of the underfill. For example, the dam may be X microns tall in order to form an underfill layer of X microns.

Typically, individual RX dies 300a-d are populated on a TIA wafer 350 through a chip-on-wafer bonding process. A group of four dies are shown as an illustration, but any number of dies can be populated on the wafer. After foundry processing of both TIA and PIC wafers, copper pillars 312 are formed on both wafers or either one of them.

To create the die assemblies, the RX PICs 300a-d are thinned to around 200 to 400 um thick from the backside. Each RX PIC 300a-d is then aligned and flip-bonded to each TIA die on the TIA wafer. The chip-on-wafer flip-chip bonding process allows thousands of optical engines to be processed at the same step. After bonding, underfill epoxy is applied to each optical engine and cured. To prevent the underfill from bleeding to the wire bond pads, polymer dam 310 can be patterned around the RX PIC. Such dams are patterned on the TIA surface prior to bonding and may have a width and a height of a few microns to a few tens of microns. Next, electrical probing maybe done to verify the electrical connection between TIA and PIC.

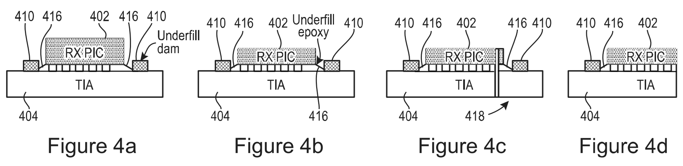

Finally, the stack-die-assembly (SDA) wafer is diced to singulate each optical engine, as shown in Figure 3(b) and Figure 4(d). The dicing may be performed along the dashed lines 314. The dummy section 318 may be removed from the wafer 305. Figure 3b illustrates a single stack-die-assembly (SDA) wafer 302a, according to an embodiment of the present disclosure.

Figure 4a-d illustrates a process for forming the optical engine assembly process.

Figure 4a illustrates the cross-sectional view of a receiver (RX) PIC 402 flip-chip bonded to the TIA 404 wafer with underfill 416 applied. The underfill 416 is contained by the dam 410.

Figure 4b illustrates the RX PIC 402 die thinned out from the backside. The PIC 402 wafer may be thinned by wafer grinding. The RX PIC 402 may be further thinned down by grinding for smaller step height on the wafer and better dicing quality.

If thinning is required, laser marking on the back side of RX PIC 402 may be added after thinning to indicate the locations of the SSC on the RX PIC 402 front side. Fiducials on the TIA 404 may be used for alignment to the SSC in the laser marking process. Otherwise, laser marks can be added on the backside of the PIC 402 wafer before the RX PICs 402 are singulated.

Figure 4c illustrates dicing through the front facet of the RX PIC 402 and the TIA 404. To provide a flat and clean facet for the fiber attachment, the dicing blade can cut through both PIC 402 and TIA 404 at the same dicing step. The RX PIC 402 has a short dummy section 418 that will be diced through and separated by the dicing blade. Figure 4d illustrates the die after singulation with the dummy section 418 removed.

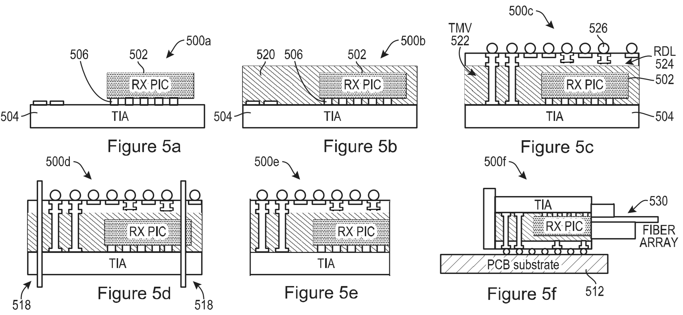

In some applications, it is desirable to get rid of the wire bonding in the packaging. Figure 5a-f illustrate a cross-sectional view of an assembly process, according to an embodiment of this disclosure. The die 500a is packaged using a fanout package on package (FPoP) approach and requires no wire bonding to the TIA 504. Figure 5a illustrates an RX PIC 502 die on a TIA 504 through flip-chip bonding. As shown in Figure 5a, no underfill is required. The TIA 504 and the PIC 502 are coupled by solder bumps 506.

After flip-chip bonding on the wafer level, the RX PIC 502 is encapsulated by a mold. Figure 5b illustrates wafer-level molding, according to an embodiment of this disclosure. The molding material 520 will fill the gap between PIC 502 and the TIA 504 so that no additional underfilling step is required. Next, through mold vias 522 (TMV) and redistribution layer 524 (RDL) are patterned over the molded TIA wafer.

Figure 5c illustrates through-mold vias 522 and redistribution layer 524 patterning with bumping 526. The bumps 526 may be solder bumps or copper pillar bumps formed on the top of the redistribution layer. As a result, the connections to the TIA 504 and PIC 502 are redistributed to the bumps/joints 526.

The wafer 500d is then diced to singulate the optical engines. Figure 5d illustrates wafer dicing, according to an embodiment of this disclosure. Figure 5e illustrates RX optical engine after dicing with the dummy sections 518 removed. The optical engine is then attached to a PCB 512 via the bump joints 526 and to a fiber array unit 530 (FAU) is attached to the facet of the PIC 502, as shown in Figure 5f. Figure 5f illustrates packaging of the RX assembly 500f on a PCB 512 coupled to the bump joints 526 and a fiber array attachment 530.

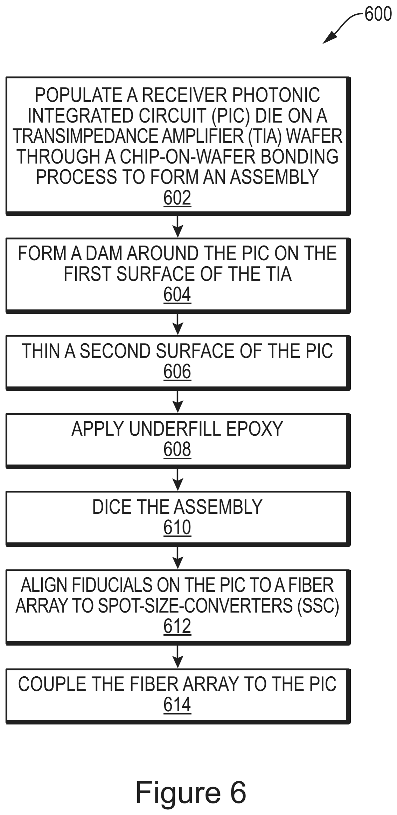

Figure 6 illustrates a method 600 of manufacture, according to an embodiment of this disclosure. In accordance with the method 600, receiver dies may populate 602 on a transimpedance amplifier (TIA) wafer through a chip-on-wafer bonding process to form an assembly. In some embodiments, populating 602 comprises aligning and flip-chip bonding the PIC to the TIA and bonding the PIC and TIA. A first surface of the PIC is bonded to a first surface of the TIA.

For example, numerous PICs may be bonded to the TIA substrate, such as the assembly 350 shown in Figure 3. Aligning the PIC with the TIA requires aligning the conductive bumps on the PIC and the TIA. Flip-chip bonding may be a method for connecting a semiconductor chip to a substrate by flipping the chip over so that its contact pads face the substrate.

Before bonding the PIC and the TIA, solder bumps or pillars may be formed on at least one of the TIA, the PIC, or combinations thereof. The pillars or bumps may be formed on both wafers or either of them. The bumps or pillars may comprise copper. The bumps or pillars facilitate the electrical connection between the PIC and the TIA.

In accordance with the method 600, a dam is formed 604 around the PIC on the first surface of the TIA. This is shown by dam 310 in Figure 3a. The dam may be a polymer dam. The polymer made comprise polyimide. The polymer dam may be patterned on the surface of the TIA prior to flip-chip bonding the PIC to the TIA. In some embodiments, the dam may be formed around the PIC. For example, the dam may be 2 microns to 99 microns in width or height.

In accordance with the method 600, a second surface of the PIC may be thinned 606. The first surface of the PIC may be opposite the second surface of the PIC. The PIC may be thinned to around 200 to 400um thick from the backside of the PIC. The second surface of the PIC is the side of the PIC that is not coupled to the TIA. The thinning may be done by grinding.

In accordance with the method 600, underfill epoxy is applied 608. The dam may have a width and a height to contain the underfill epoxy. The underfill epoxy may comprise a glass filled epoxy resin. The underfill epoxy protects the component from mechanical shock, vibration, thermal cycle, and provides reinforcements to the solder joints. The underfill epoxy increases the reliability of the assembly.

In accordance with the method 600, the assembly may be diced 610. In some embodiments, dicing the assembly comprises slicing through a dummy section of the PIC and the TIA at the same time with a blade.

In accordance with the method 600, fiducials may be aligned 612 on the PIC to a fiber array to spot-size-converters (SSC). The method may comprise lining up fiducials to a spot-size-converters (SSC) during laser marking. The method may comprise marking on a backside of the PIC to indicate locations of the spot-size-converters (SSC) on a front side of the PIC. In accordance with the method 600, a fiber array may be coupled 614 to the PIC.

In some embodiments, the method may comprise adding laser marks on the backside of the PIC before dicing in order to be able to line up the fiber array to the SSC of the PIC. In some embodiments, after thinning, laser marking on the backside of the PIC may be added to indicate the locations of the SSC on the PIC front side.

For example, fiducials on the TIA may be used for alignment to the SSC in the laser marking process. Otherwise, laser marks can be added on the backside of the PIC wafer before the PICs are singulated. This is beneficial for aligning the fiber array to the PIC since the PIC is upside down. The additional laser marks or fiducials are able to aid in alignment of the PIC and the fiber array. For example, the method 600 may include marking, by a laser, on the backside of the PIC to indicate locations of the SSC on the first surface of the PIC. The method 600 may also include marking, by a laser, on the second surface of the PIC before dicing.

In some embodiments, the TIA is powered on to read a photodetector on the PIC during the aligning. During aligning, the TIA is powered on to determine the signal quality to facilitate correct alignment of the fiber array.

In some embodiments, electrical probing is done to verify the connections between the TIA and the PIC. The electrical probing verifies that the connection between the TIA and the PIC has a good quality.

In some embodiments, the method 600 may be performed for a group of dies that are on a common substrate. The dicing may separate the dies, such as shown in Figure 3a.

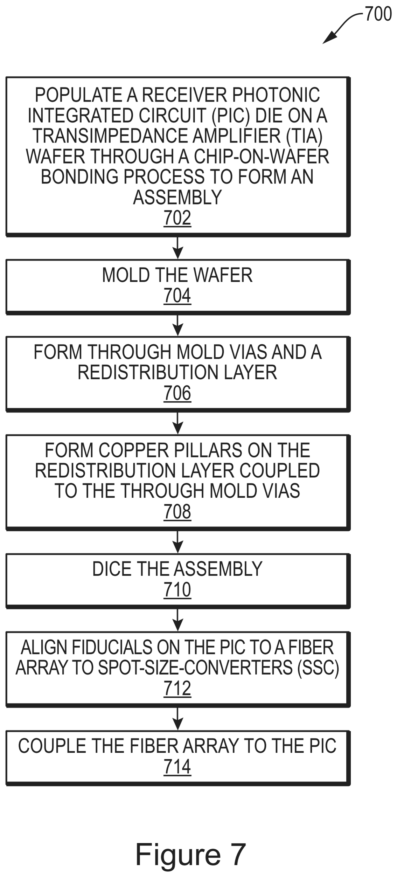

Figure 7 illustrates a method 700 of manufacture of a fanout package on package (FPoP) without wire bonding to a transimpedance amplifier. The method 700 comprises populating 702 receiver photonic integrated circuit (PIC) dies on a transimpedance amplifier (TIA) wafer through a chip-on-wafer bonding process to form an assembly. In some embodiments, populating comprises flip-chip bonding the PIC to the TIA.

The method may comprise molding 704 the wafer. In some embodiments, molding the wafer comprises encapsulating the TIA and the PIC by a mold and filling gaps between the PIC and the TIA with molding material. The molding material may be a black epoxy mold compound.

The method may comprise forming 706 through mold vias and a redistribution layer. The through mold vias may be coupled to the copper bumps on the TIA. The registration layer may be a layer disposed on a surface of the molding material. The through mold vias may extend through the redistribution layer.

The method may comprise forming 708 copper pillars on at least one of the TIA, PIC, or combination thereof. The copper pillars may be coupled to the through mold vias and disposed on the redistribution layer. The copper pillars may be solder bumps.

The method may comprise dicing 710 the assembly. In some embodiments, dicing the assembly comprises slicing through a dummy section of the PIC and the TIA as the same time with a dicing blade.

In accordance with the method 700, fiducials may be aligned 712 on the PIC to a fiber array to spot-size-converters (SSC). The method may comprise lining up fiducials to a spot-size-converters (SSC) during laser marking. The method may comprise marking on a backside of the PIC to indicate locations of the spot-size-converters (SSC) on a front side of the PIC. In accordance with the method 700, a fiber array may be coupled 714 to the PIC.

In some embodiments, the method may comprise attaching the assembly to a PCB to the copper pillars.

In some embodiments, the method may comprise redistributing connections to the TIA and the PIC to the bumps. The signals from the TIA may be transmitted through the through mold vias to the copper pillars. The signals from the PIC may be transmitted through the through mold vias to the copper pillars.

In various embodiments, this disclosure proposes a low-cost silicon photonic RX optical engine for PAM4 applications. The advantages of the embodiments of the present disclosure include reducing cost significantly by reducing the PIC die area. Competitive cost compared to the approach using surface illuminated III-V PDs, maintaining high performance RF connections between PD and TIA through copper pillars, leveraging high density photonic integration on silicon photonics to enable more complex functionalities such as on-chip multiplexing, and with a TIA of reconfigured bandwidth, the optical engine can work for different generations of PAM4 applications, for example for both 53 Gbaud and 106 Gbaud PAM4

One general aspect includes an optical device. The optical device also includes a substrate; a receiver photonic integrated circuit (PIC) mechanically coupled to the substrate, and a transimpedance amplifier (TIA) mounted to the substrate and electrically coupled to the PIC.

Implementations may include one or more of the following features. The optical device may include a receiver die flip-chip bonded to a TIA die via copper pillar bumps. The PIC has a smaller footprint than the TIA. The optical device may include a fiber array aligned with and attached to the pic using an epoxy bonding material. The optical device may include alignment marks on a backside of the PIC, configured to indicate a position of spot-size converters (SSCS). The pic may include: a plurality of photodetectors; a plurality of waveguides, each configured to guide light to at least one of the photodetectors; and spot-size converters optically coupled to the plurality of waveguides.

One general aspect includes a method of manufacturing an optical device. The method also includes bonding a first surface of a receiver photonic integrated circuit (PIC) die onto a first surface of a transimpedance amplifier (TIA) wafer using a chip-on-wafer process to form an assembly. The method also includes forming a dam around the PIC on the first surface of the TIA. The method also includes thinning a second surface of the PIC, opposite the first surface of the PIC. The method also includes applying an underfill epoxy to the assembly. The method also includes dicing the assembly. The method also includes aligning fiducials on the pic to a fiber array relative to the spot-size converters (SSCS). The method also includes coupling the fiber array to the pic.

Implementations may include one or more of the following features. The method may include marking the second surface of the pic with a laser to indicate the locations of the SSCS on the first surface. The method may include performing the laser marking before dicing the assembly. The method may include powering on the TIA to read signals from at least one photodetector on the pic during the aligning fiducials process. The method may include aligning and flip-chip bonding the PIC die to the TIA wafer during the bonding process. The method may include forming copper pillars on the TIA, the PIC, or both, prior to the bonding process. The method may include forming the dam with dimensions sufficient to contain the underfill epoxy during curing. The method may include slicing through a dummy section of the PIC and TIA simultaneously using a blade during the dicing process.

One general aspect includes a method of manufacturing a fan-out package on package (FPOP) optical device without wire bonding to a transimpedance amplifier. The method also includes bonding a first surface of a receiver photonic integrated circuit (PIC) die onto a first surface of a transimpedance amplifier (TIA) wafer using a chip-on-wafer process to form an assembly. The method also includes molding the assembly with a molding material. The method also includes forming through-mold vias and a redistribution layer. The method also includes forming copper pillars on the redistribution layer, coupled to the through-mold vias. The method also includes dicing the molded assembly. The method also includes aligning fiducials on the pic to a fiber array relative to the SSCS. The method also includes coupling the fiber array to the pic.

Implementations may include one or more of the following features. The method where molding the assembly may include encapsulating the TIA and the PIC with a molding material, including filling gaps between the PIC and the TIA. The method may include attaching the molded assembly to a substrate via the copper pillars. The method may include powering on the TIA to verify signals from at least one photodetector on the pic during the aligning fiducials process. The method may include flip-chip bonding multiple PICs to the TIA wafer during the bonding process. The method may include redistributing electrical connections from the TIA and PIC to the copper pillars via the redistribution layer.

Having thus described several aspects and embodiments of the technology of this application, it is to be appreciated that various alterations, modifications, and improvements will readily occur to those of ordinary skill in the art. Such alterations, modifications, and improvements are intended to be within the scope of the technology described in the application. It is, therefore, to be understood that the foregoing embodiments are presented by way of example only and that, within the scope of the appended claims and equivalents thereto, inventive embodiments may be practiced otherwise than as specifically described. In addition, any combination of two or more features, systems, articles, materials, and/or methods described herein, if such features, systems, articles, materials, and/or methods are not mutually inconsistent, is included within the scope of the present disclosure.

In some embodiments, a device controller may be any type of controller. In certain embodiments, a microprocessor may be a device controller and run a control loop. In other embodiments, an ASIC may be a device controller and may run a control loop. In further embodiments, a device controller may be an analog circuitry. In many embodiments, a bias controller may be a device controller. In certain embodiments, a bias controller may be an analog circuitry.

In some embodiments, one or more of the embodiments described herein may be stored on a computer readable medium. In certain embodiments, a computer readable medium may be one or more memories, one or more hard drives, one or more flash drives, one or more compact disk drives, or any other type of computer readable medium. In certain embodiments, one or more of the embodiments described herein may be embodied in a computer program product that may enable a processor to execute the embodiments. In many embodiments, one or more of the embodiments described herein may be executed on at least a portion of a processor.

In most embodiments, a processor may be a physical or virtual processor. In other embodiments, a virtual processor may be spread across one or more portions of one or more physical processors. In certain embodiments, one or more of the embodiments described herein may be embodied in hardware such as a Digital Signal Processor (DSP). In certain embodiments, one or more of the embodiments herein may be executed on a DSP. One or more of the embodiments herein may be programmed into a DSP. In some embodiments, a DSP may have one or more processors and one or more memories. In certain embodiments, a DSP may have one or more computer readable storages. In many embodiments, a DSP may be a custom designed ASIC chip. In other embodiments, one or more of the embodiments stored on a computer readable medium may be loaded into a processor and executed.

Also, as described, some aspects may be embodied as one or more methods. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The phrase "and/or" as used herein in the specification and in the claims, should be understood to mean "either or both" of the elements so conjoined, e.g., elements that are conjunctively present in some cases and disjunctively present in other cases.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "approximately" and "about" may be used to mean within ±20% of a target value in some embodiments, within ±10% of a target value in some embodiments, within ±5% of a target value in some embodiments, and yet within ±2% of a target value in some embodiments. The terms "approximately" and "about" may include the target value.

In the claims, as well as in the specification above, all transitional phrases such as "comprising," "including," "carrying," "having," "containing," "involving," "holding," "composed of," and the like are to be understood to be open-ended, e.g., to mean including but not limited to. The transitional phrases "consisting of" and "consisting essentially of" shall be closed or semi-closed transitional phrases, respectively.

Where a range or list of values is provided, each intervening value between the upper and lower limits of that range or list of values is individually contemplated and is encompassed within the disclosure as if each value were specifically enumerated herein. In addition, smaller ranges between and including the upper and lower limits of a given range are contemplated and encompassed within the disclosure. The listing of exemplary values or ranges is not a disclaimer of other values or ranges between and including the upper and lower limits of a given range.

Embodiments disclosed herein may be embodied as a system, method, or computer program product. Accordingly, embodiments may take the form of an entirely hardware embodiment, an entirely software embodiment (including firmware, resident software, microcode, etc.) or an embodiment combining software and hardware aspects that may all generally be referred to herein as a "circuit," "module," or "system." Furthermore, embodiments may take the form of a computer program product embodied in one or more computer readable medium(s) having computer readable program code embodied thereon.

## Claims

1. An optical device comprising:
a substrate;
a receiver photonic integrated circuit (PIC) mechanically coupled to the substrate; and
a transimpedance amplifier (TIA) mounted to the substrate and electrically coupled to the PIC.

2. The optical device of claim 1, further comprising a receiver die flip-chip bonded to a TIA die via copper pillar bumps.

3. The optical device of any preceding claim, wherein the PIC has a smaller footprint than the TIA.

4. The optical device of any preceding claim, further comprising a fiber array aligned with and attached to the PIC using an epoxy bonding material.

5. The optical device of any preceding claim, further comprising alignment marks on a backside of the PIC, configured to indicate a position of spot-size converters (SSCs).

6. The optical device of any preceding claim, wherein the PIC comprises:
a plurality of photodetectors;
a plurality of waveguides, each configured to guide light to at least one of the photodetectors; and
spot-size converters optically coupled to the plurality of waveguides.

7. A method of manufacturing an optical device, the method comprising:
bonding a first surface of a receiver photonic integrated circuit (PIC) die onto a first surface of a transimpedance amplifier (TIA) wafer or die to form an assembly;
forming a dam around the PIC on the first surface of the TIA;
thinning a second surface of the PIC, opposite the first surface of the PIC;
applying an underfill epoxy to the assembly;
dicing the assembly;
aligning fiducials on the PIC to a fiber array relative to spot-size converters (SSCs); and
coupling the fiber array to the PIC.

8. The method of claim 7, comprising marking the second surface of the PIC with a laser to indicate locations of the SSCs on the first surface.

9. The method of claim 8, comprising performing the laser marking before dicing the assembly.

10. The method of any of claims 7 to 9, comprising powering on the TIA to read signals from at least one photodetector on the PIC during the aligning fiducials process.

11. The method of any of claims 7 to 10, comprising aligning and flip-chip bonding the PIC die to the TIA wafer during the bonding process.

12. The method of any of claims 7 to 11, comprising forming copper pillars on the TIA, the PIC, or both, prior to the bonding process, the method optionally comprising forming the dam with dimensions sufficient to contain the underfill epoxy during curing.

13. The method of any of claims 7 to 12, comprising slicing through a dummy section of the PIC and TIA simultaneously using a blade during the dicing process.

14. A method of manufacturing a fan-out package on package (FPoP) optical device without wire bonding to a transimpedance amplifier, the method comprising:
bonding a first surface of a receiver photonic integrated circuit (PIC) die onto a first surface of a transimpedance amplifier (TIA) wafer using a chip-on-wafer process to form an assembly;
molding the assembly with a molding material;
forming through-mold vias and a redistribution layer;
forming copper pillars on the redistribution layer, coupled to the through-mold vias;
dicing the molded assembly;
aligning fiducials on the PIC to a fiber array relative to spot-size converters (SSCs); and
coupling the fiber array to the PIC.

15. The method of claim 14, wherein any one or more of:
A) molding the assembly comprises encapsulating the TIA and the PIC with a molding material, including filling gaps between the PIC and the TIA;
B) the method further comprises attaching the molded assembly to a substrate via the copper pillars;
C) the method further comprises powering on the TIA to verify signals from at least one photodetector on the PIC during the aligning fiducials process;
D) the method further comprises flip-chip bonding multiple PICs to the TIA wafer during the bonding process;
E) the method further comprises redistributing electrical connections from the TIA and PIC to the copper pillars via the redistribution layer.
